# EUROPEAN PATENT APPLICATION

(11) **EP 4 422 273 A1**
(43) Date of publication of application: **28.08.2024**
(21) Application number: 22891982.5
(22) Date of filing: 08.11.2022
(51) Int. Cl.: H04W 36/00, H04W 36/32, H04W 8/18

(54) **SWITCHING METHOD AND APPARATUS, NETWORK FUNCTION, AND STORAGE MEDIUM**

(30) Priority: 09.11.2021 CN 202111322041
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: LI, Aihua, Beijing 100053 (CN); LIU, Le, Beijing 100053 (CN)
(74) Representative: J A Kemp LLP
(86) International application number: PCT/CN2022/130682
(87) International publication number: WO 2023/083188

(57) **Abstract**

Embodiments of the present disclosure disclose a switching method and apparatus, a network function, and a storage medium. The method comprises: a first network function selects or discovers, on the basis of location information of one or more user equipments (UEs), a second network function corresponding to each UE; and the first network function decides to respectively transfer or transmit a data subscription or data request about the one or more UEs to the second network function corresponding to each UE.

## Description

### CROSS-REFERENCE TO RELATED APPLICATION

This application is based on and claims priority to Chinese patent No. 202111322041.9 filed on November 09, 2021, the contents of which are hereby incorporated by reference in by its entirety.

### TECHNICAL FIELD

The disclosure relates to the technical field of communications, and in particular to a method and apparatus for handover, a network function, and a storage medium.

### BACKGROUND

A data collection coordination function (DCCF) serves as a data collection coordination node in a core network. A DCCF has a fixed data collection region, and a data source network function (NF) or a data source NF set in a same area should be associated with only one DCCF instance or DCCF set. Therefore, there may be a scenario where a DCCF needs to be reselected due to a change in user mobility: for position change of user equipment (UE), a current DCCF may not be able to provide data of the UE of which the position has been changed for a data consumer.

### SUMMARY

Embodiments of the disclosure provide a method and apparatus for handover, a network function entity and a storage medium.

The technical solution of the embodiments of the disclosure is implemented as follows.

In a first aspect, embodiments of the disclosure provide a method for handover. The method includes following for each of one or more user equipments (UEs). A first network function entity selects or discovers a second network function entity corresponding to the UE based on position information of the UE. The first network function entity decides to transfer or transmit a data subscription or data request of the UE to the second network function entity corresponding to the UE.

In some optional embodiments of the disclosure, the method further includes following for each of the one or more UEs. The first network function entity sends to a third network function entity a first message for selecting or discovering the second network function entity corresponding to the UE. The first message includes a first parameter, and the first parameter at least includes at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier. The first network function entity receives a second message from the third network function entity. The second message includes a second parameter, and the second parameter at least includes at least one of following: an NF identifier, or the NF set identifier.

In some optional embodiments of the disclosure, the method further includes: for each of the one or more UEs, the first network function entity transfers or transmits a data subscription or data request of the corresponding UE to the second network function entity corresponding to the UE.

In some optional embodiments of the disclosure, the operation that for each of the one or more UEs, the first network function entity transfers or transmits the data subscription or data request of the corresponding UE to the second network function entity corresponding to the UE includes following. For each of the one or more UEs, the first network function entity sends a third message to the second network function entity corresponding to the UE. The third message is used for transferring or transmitting a data subscription or data request of the UE from a fifth network function entity, and the third message includes relevant information of the data subscription or data request of the UE.

In some optional embodiments of the disclosure, the method further includes: for each of the one or more UEs the first network function entity receives a fourth message from a fifth network function entity. The fourth message is used for subscribing or requesting data of the UE. The fourth message includes a third parameter. The third parameter at least includes at least one of following: an identifier of the UE, an S-NSSAI, an NF type, an NF set identifier, an NWDAF identifier, an analysis identifier, or an NF instance identifier. Alternatively, the method further includes that the first network function entity receives a fifth message from the fifth network function entity through a fourth network function entity. The fifth message is used for subscribing or requesting the data of the UE, and the fifth message at least includes the third parameter.

In some optional embodiments of the disclosure, the method further includes: for each of the one or more UEs, the first network function entity sends a sixth message to the fifth network function entity or the fourth network function entity. The sixth message is used for notifying that the data subscription or data request of the UE is transferred or transmitted successfully, and the sixth message includes a first subscription identifier related to the first network function entity.

In some optional embodiments of the disclosure, the method further includes: for each of the one or more UEs, the first network function entity sends a seventh message for unsubscription to a sixth network function entity. The sixth network function entity supports providing the data of the UE.

In some optional embodiments of the disclosure, the method further includes: for each of the one or more UEs, the first network function entity decides or discovers a sixth network function entity through the third network function entity, and collects or subscribes the data of the UE from the sixth network function entity. The sixth network function entity supports providing the data of the UE.

In some optional embodiments of the disclosure, the operation that for each of the one or more UEs, the first network function entity decides or discovers the sixth network function entity through the third network function entity includes following. The first network function entity sends an eighth message for deciding or discovering the sixth network function entity to the third network function entity. The eighth message includes the third parameter. The first network function entity receives a ninth message from the third network function entity. The ninth message at least includes a fourth parameter, and the fourth parameter at least includes at least one of following: an NF identifier, or the NF set identifier.

In some optional embodiments of the disclosure, the operation of collecting or subscribing the data of the UE from the sixth network function entity includes: for each of the one or more UEs, the first network function entity sends a tenth message to the sixth network function entity. The tenth message is used for collecting or subscribing the data of the UE, and the tenth message at least includes the third parameter.

In some optional embodiments of the disclosure, the method further includes that, for each of the one or more UEs, the first network function entity decides or subscribes the position information of the UE through a seventh network function entity.

In a second aspect, embodiments of the disclosure further provide a method for handover. The method includes following for each of one or more user equipments (UEs).

A second network function entity receives a data subscription or data request from a first network function entity, a fourth network function entity or a fifth network function entity. The data subscription or data request is used for transferring or transmitting a data subscription or data request of the UE. The second network function entity decides or discovers a sixth network function entity through a third network function entity, and subscribes or requests data of the UE from the sixth network function entity. The sixth network function entity supports providing the data of the UE.

In some optional embodiments of the disclosure, the method further includes: for each of the one or more UEs, the second network function entity sends an eleventh message to the fifth network function entity or the fourth network function entity. The eleventh message is used for notifying that the data subscription or data request of the UE is transferred or transmitted successfully, and the eleventh message includes a second subscription identifier related to the second network function entity.

In some optional embodiments of the disclosure, the operation that the second network function entity receives the data subscription or data request from the first network function entity, the fourth network function entity or the fifth network function entity includes the following:

The second network function entity receives a third message from the first network function entity. The third message is used for transferring or transmitting a data subscription or data request of the UE from a fifth network function entity, and the third message includes relevant information of the data subscription or data request of the UE. Alternatively, the second network function entity receives a fourteenth message from the fourth network function entity or the fifth network function entity. The fourteenth message is used for transferring or transmitting a data subscription or data request of the fifth network function entity about UE, and the fourteenth message includes relevant information of the data subscription or data request of the UE.

In a third aspect, embodiments of the disclosure further provide a method for handover. The method includes following for each of one or more user equipments (UEs).

A fourth network function entity selects or discovers a second network function entity corresponding to the UE based on position information of the UE. The fourth network function entity decides to transfer or transmit a data subscription or data request of the corresponding UE to the second network function entity corresponding to the UE.

In some optional embodiments of the disclosure, the method further includes following for each of the one or more UEs. The fourth network function entity sends to a third network function entity a twelfth message for selecting or discovering a second network function entity corresponding to the UE. The twelfth message includes a first parameter, and the first parameter at least includes at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier. The fourth network function entity receives a thirteenth message from the third network function entity. The thirteenth message includes a second parameter, and the second parameter at least includes at least one of following: an NF identifier, or the NF set identifier.

In some optional embodiments of the disclosure, the method further includes: for each of the one or more UEs, the fourth network function entity transfers or transmits a data subscription or data request of the corresponding UE to the second network function entity corresponding to the UE.

In some optional embodiments of the disclosure, the operation that for each of the one or more UEs, the fourth network function entity transfers or transmits the data subscription or data request of the corresponding UE to the second network function entity corresponding to the UE includes following. For each of the one or more UEs, the fourth network function entity sends a fourteenth message corresponding to the UE to the second network function entity corresponding to the UE. The fourteenth message is used for transferring or transmitting a data subscription or data request of the UE from a fifth network function entity, and the fourteenth message includes relevant information of the data subscription or data request of the corresponding UE.

In some optional embodiments of the disclosure, the method further includes following for each of the one or more UEs: the fourth network function entity receives a fifteenth message from a fifth network function entity. The fifteenth message is used for subscribing or requesting data of the UE. The fifteenth message includes a third parameter, and the third parameter at least includes at least one of following: an identifier of the UE, an S-NSSAI, an NF type, an NF set identifier, an NWDAF identifier, an analysis identifier, or an NF instance identifier. The fourth network function entity decides or discovers the first network function entity through a third network function entity, and sends a sixteenth message to the first network function entity. The sixteenth message is used for subscribing or requesting the data of the UE, and the sixteenth message at least includes the third parameter.

In some optional embodiments of the disclosure, the method further includes following for each of the one or more UEs: the fourth network function entity receives a seventeenth message from the first network function entity. The seventeenth message is used for notifying that the data subscription or data request of the UE is transferred or transmitted successfully, and the seventeenth message includes a first subscription identifier related to the first network function entity. The fourth network function entity receives an eighteenth message from the second network function entity. The eighteenth message is used for notifying that the data subscription or data request about the UE is transferred or transmitted successfully, and the eighteenth message includes a second subscription identifier related to the second network function entity.

In some optional embodiments of the disclosure, the method further includes that the fourth network function entity decides or subscribes the position information of the UE through a seventh network function entity.

In a fourth aspect, embodiments of the disclosure further provide a method for handover. The method includes following for each of one or more user equipments (UEs).

A fifth network function entity selects or discovers a second network function entity corresponding to the UE based on position information of the UE. The fifth network function entity decides to transfer or transmit a data subscription or data request of the corresponding UE to the second network function entity corresponding to the UE.

In some optional embodiments of the disclosure, the method further includes following for each of the one or more UEs. The fifth network function entity sends to a third network function entity a nineteenth message for selecting or discovering a second network function entity corresponding to the UE. The nineteenth message includes a first parameter, and the first parameter at least includes at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier. The fifth network function entity receives a twentieth message from the third network function entity. The twentieth message includes a second parameter, and the second parameter at least includes at least one of following: an NF identifier, or the NF set identifier.

In some optional embodiments of the disclosure, the method further includes: for each of the one or more UEs, the fifth network function entity transfers or transmits a data subscription or data request of the corresponding UE to the second network function entity corresponding to the UE.

In some optional embodiments of the disclosure, the operation that for each of the one or more UEs, the fifth network function entity transfers or transmits the data subscription or data request of the corresponding UE to the second network function entity corresponding to the UE includes following. For each of the one or more UEs, the fifth network function entity sends a fourteenth message corresponding to the UE to the second network function entity corresponding to the UE. The fourteenth message is used for transferring or transmitting a data subscription or data request of the UE from the fifth network function entity, and the fourteenth message includes relevant information of the data subscription or data request of the corresponding UE.

In some optional embodiments of the disclosure, the method further includes: for each of the one or more UEs, the fifth network function entity decides or discovers a first network function entity through a third network function entity, and sends a fourth message to the first network function entity. The fourth message is used for subscribing or requesting data of the UE. The fourth message includes a third parameter, and the third parameter at least includes at least one of following: an identifier of the UE, an S-NSSAI, an NF type, an NF set identifier, an NWDAF identifier, an analysis identifier, or an NF instance identifier.

In some optional embodiments of the disclosure, the method further includes following for each of the one or more UEs. The fifth network function entity receives a sixth message from the first network function entity. The sixth message is used for notifying that the data subscription or data request of the UE is transferred or transmitted successfully, and the sixth message includes a first subscription identifier related to the first network function entity. The fifth network function entity receives an eleventh message from the second network function entity. The eleventh message is used for notifying that the data subscription or data request of the UE is transferred or transmitted successfully, and the eleventh message includes a second subscription identifier related to the second network function entity.

In some optional embodiments of the disclosure, the method further includes that for each of the one or more UEs, the fifth network function entity decides or subscribes the position information of the UE through a seventh network function entity.

In a fifth aspect, embodiments of the disclosure further provide an apparatus for handover. The apparatus includes a first determination unit and a second determination unit.

For each of one or more user equipments (UEs), the first determination unit is configured to: select or discover a second network function entity corresponding to the UE based on position information of the UE. For each of the one or more UEs, the second determination unit is configured to: decide to transfer or transmit a data subscription or data request of the UE to the second network function entity corresponding to the UE.

In a sixth aspect, embodiments of the disclosure further provide an apparatus for handover. The apparatus includes a second communication unit and a fourth determination unit.

For each of the one or more UEs, the second communication unit is configured to receive a data subscription or data request from a first network function entity, a fourth network function entity or a fifth network function entity. The data subscription or data request is used for transferring or transmitting a data subscription or data request of the UE. For each of the one or more UEs, the fourth determination unit is configured to decide or discover a sixth network function entity through a third network function entity. For each of the one or more UEs, the second communication unit is further configured to subscribe or request data of the UE from the sixth network function entity. The sixth network function entity supports providing the data of the UE.

In a seventh aspect, embodiments of the disclosure further provide an apparatus for handover. The apparatus includes a fifth determination unit and a sixth determination unit.

For each of one or more user equipments (UEs), the fifth determination unit is configured to: select or discover a second network function entity corresponding to the UE based on position information of the UE. For each of the one or more UEs, the sixth determination unit is configured to: decide to transfer or transmit a data subscription or data request of the UE to the second network function entity corresponding to the UE.

In an eighth aspect, embodiments of the disclosure further provide an apparatus for handover. The apparatus includes an eighth determination unit and a ninth determination unit.

For each of one or more user equipments (UEs), the eighth determination unit is configured to: select or discover a second network function entity corresponding to the UE based on position information of the UE. For each of the one or more UEs, the ninth determination unit is configured to: decide to transfer or transmit a data subscription or data request of the UE to the second network function entity corresponding to the UE.

In a ninth aspect, embodiments of the disclosure provide a computer-readable storage that stores a computer program. The computer program, when executed by the processor, implements the steps of the method for handover in the first aspect, the second aspect, the third aspect or the fourth aspect.

In a tenth aspect, embodiments of the disclosure provide a network function entity, including a memory, a processor, and a computer program that is stored in the memory and is capable of being run on the processor. The processor executes the computer program to implement the steps of the method of the first aspect, the second aspect, the third aspect or the fourth aspect.

In the method and apparatus for handover, the network function entity and the storage medium provided according to the embodiments of the disclosure, the method includes that, for each of one or more UEs, a first network function entity selects or discovers a second network function entity corresponding to the UE based on position information of the UE. The first network function entity decides to transfer or transmit a data subscription or data request of the UE to the second network function entity corresponding to the UE. By means of the technical solution according to the embodiments of the disclosure, network function reselection (namely, DCCF reselection) is realized through the first network function entity, and a consumer does not need to re-subscribe data in case of a position of UE changes. Interoperation of multiple network functions (i.e., DCCFs) is realized, and continuity of a data collection process is ensured.

### BRIEF DESCRIPTION OF THE DRAWINGS

FIG. 1 illustrates a first schematic flowchart of a method for handover according to embodiments of the disclosure.
FIG. 2 illustrates a second schematic flowchart of a method for handover according to embodiments of the disclosure.
FIG. 3 illustrates a third schematic flowchart of a method for handover according to embodiments of the disclosure.
FIG. 4 illustrates a fourth schematic flowchart of a method for handover according to embodiments of the disclosure.
FIG. 5 illustrates a first schematic flowchart of interaction of a method for handover according to embodiments of the disclosure.
FIG. 6 illustrates a second schematic flowchart of interaction of a method for handover according to embodiments of the disclosure.
FIG. 7 illustrates a first schematic structural diagram of composition of an apparatus for handover according to embodiments of the disclosure.
FIG. 8 illustrates a second schematic structural diagram of composition of an apparatus for handover according to embodiments of the disclosure.
FIG. 9 illustrates a third schematic structural diagram of composition of an apparatus for handover according to embodiments of the disclosure.
FIG. 10 illustrates a fourth schematic structural diagram of composition of an apparatus for handover according to embodiments of the disclosure.
FIG. 11 illustrates a schematic structural diagram of hardware composition of a network function entity according to embodiments of the disclosure.

### DETAILED DESCRIPTION

The disclosure is further described in detail in conjunction with the accompanying drawings and particular embodiments.

The technical solution of the embodiments of the disclosure may be applied to various communication systems, for example, a global system of mobile communication (GSM) system, a long term evolution (LTE) system, a 5th generation (5G) system or the like. Optionally, the 5G system or 5G network may also be referred to as a new radio (NR) system or NR network.

Exemplarily, the communication system to which the embodiments of the disclosure are applied may include a network device and a terminal device (or may be referred to as a terminal, a communication terminal or the like). The network function entity may be a device communicating with the terminal device. The network device can provide communication coverage for a specific area, and can communicate with the terminal within the coverage. Optionally, the network device may be a base station in various communication systems, for example an evolutional NodeB (eNB) in an LTE system, or a base station (gNB) in a 5G system or NR system.

It is to be understood that devices having a communication function in the network/system in the embodiments of the disclosure may be referred to as a communication device. The communication device may include a network device and a terminal that have a communication function. The network device and the terminal device may be particular devices described above, which will not be described herein again. The communication devices may further include other devices in the communication system, for example a network controller, a mobility management entity and other network entities, which is not limited in the embodiments of the disclosure.

It is to be understood that the terms "system" and "network" herein are often used exchangeably. The term "and/or" herein merely describes a relation between associated objects, representing that three relations may exist. For example A and/or B may represent following three cases: existence of A alone, existence of both A and B, and existence of B alone. The character "/" generally indicates that the contextual objects are in an "or" relationship.

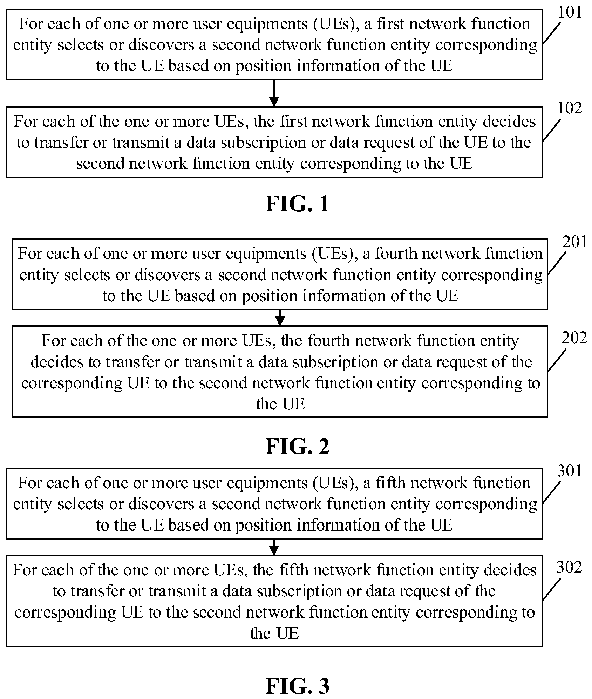

Embodiments of the disclosure provide a method for handover. FIG. 1 illustrates a first schematic flowchart of a method for handover according to embodiments of the disclosure. As illustrated in FIG. 1, the method includes following operations for each of one or more user equipments (UEs).

At 101, a first network function entity selects or discovers a second network function entity corresponding to the UE based on position information of the UE.

At 102, the first network function entity decides to transfer or transmit a data subscription or data request of the UE to the second network function entity corresponding to the UE.

The method for handover in this embodiment is applied to the first network function entity. Exemplarily, the first network function entity may be referred to as a source DCCF, namely a data collection coordination function used before a position change of UE. Correspondingly, the second network function entity may be referred to as a target DCCF, namely a data collection coordination function that can adapt to the position change of the UE after the position change of the UE.

In this embodiment, for each of one or more UEs, when position information of the UE changes, the first network function entity determines whether a data collection service can be provided by itself continuously according to the changed position information of the UE. When it is determined that the first network function entity cannot provide the data collection service continuously, the first network function entity selects or discovers a second network function entity corresponding to the UE, and further decides to transfer or transmit a data subscription or data request of the UE to the second network function entity corresponding to the UE, so as to transfer or transmit the data subscription or data request of the UE to the second network function entity corresponding to the UE subsequently.

In the technical solution according to this embodiment, network function entity reselection (namely, DCCF reselection) is realized through a first network function entity, and a consumer does not need to re-subscribe data in case of a position of UE changes. Interoperation of multiple network function entities (i.e., DCCFs) is realized, and continuity of a data collection process is ensured.

In some optional embodiments of the disclosure, the method further includes that, for each of the one or more UEs, the first network function entity decides or subscribes the position information of the UE through a seventh network function entity.

In this embodiment, the seventh network function entity may be a network function entity (NF) capable of providing position information of UE, or may be an NF having a UE position sensing function or the like. Exemplarily, the seventh network function entity may be an access and mobility management function (AMF), a location management function (LMF) or the like.

In this embodiment, for each of the one or more UEs, the first network function entity may subscribe the position information of the UE or a movement event of the UE from the seventh network function entity. When the position of the UE changes, the seventh network function entity may send a notification message or an event notification to the first network function entity. The notification message or the event notification contains the position information of the UE.

In some optional embodiments of the disclosure, the method further includes that, for each of the one or more UEs, the first network function entity selects or discovers the second network function entity corresponding to the UE through a third network function entity.

In this embodiment, exemplarily, the third network function entity may be a network repository function (NRF), a bootstrapping server function (BSF) or unified data management (UDM). For each of the one or more UEs, the first network function entity may select or discover the second network function entity corresponding to the UE from the third network function entity, namely, selecting or discovering the second network function entity corresponding to position information of the UE.

In some optional embodiments, the operation that for each of the one or more UEs, the first network function entity selects or discovers the second network function entity corresponding to the UE through the third network function entity includes: for each of the one or more UEs, the first network function entity sends to a third network function entity a first message for selecting or discovering the second network function entity corresponding to the UE. The first message includes a first parameter, and the first parameter at least includes at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier. The first network function entity receives a second message from the third network function entity. The second message includes a second parameter, and the second parameter at least includes at least one of following: an NF identifier, or the NF set identifier.

As such, for each of the one or more UEs, the first network function entity may send the first message to the third network function entity, and according to the first parameter carried in the first message, the third network function entity may query the second network function entity capable of providing a data collection service. Through the information about the second network function entity (for example, the NF identifier, and the NF set identifier) carried in the second parameter in the second message, the first network function entity may select or discover the second network function entity corresponding to the UE.

In some optional embodiments of the disclosure, the method further includes: for each of the one or more UEs, the first network function entity transfers or transmits a data subscription or data request of the corresponding UE to the second network function entity corresponding to the UE.

In this embodiment, different UEs may correspond to a same second network function entity or may correspond to different second network function entities. Therefore, for each of the one or more UEs, the first network function entity transfers or transmits a data subscription or data request of the corresponding UE to the second network function entity corresponding to the UE.

In some optional embodiments, the operation that for each of the one or more UEs, the first network function entity transfers or transmits the data subscription or data request of the corresponding UE to the second network function entity corresponding to the UE includes: for each of the one or more UEs, the first network function entity sends a third message to the second network function entity corresponding to the UE. The third message is used for transferring or transmitting a data subscription or data request of the UE from a fifth network function entity, and the third message includes relevant information of the data subscription or data request of the UE.

In this embodiment, the data subscription or data request is initiated by the UE through a fifth network function entity. Exemplarily, the fifth network function entity may particularly be a consumer. The consumer is a node having a demand for an NWDAF analysis service. Optionally, the consumer may be implemented by another network device. Exemplarily, the consumer may be a network function (NF) device, an application function (AF) device, or the like. Of course, other node devices having a demand for the NWDAF analysis service also fall within the scope of protection of this embodiment, which is not limited in the embodiment.

In some optional embodiments of the disclosure, before the operation 101, the method further includes: for each of the one or more UEs, the first network function entity receives a fourth message from a fifth network function entity. The fourth message is used for subscribing or requesting data of the UE. The fourth message includes a third parameter. The third parameter at least includes at least one of following: an identifier of the UE, an S-NSSAI, an NF type, an NF set identifier, an NWDAF identifier, an analysis identifier, or an NF instance identifier. Alternatively, the first network function entity receives a fifth message from the fifth network function entity through a fourth network function entity. The fifth message is used for subscribing or requesting the data of the UE, and the fifth message at least includes the third parameter.

In this embodiment, for each of the one or more UEs, the fifth network function entity originally initiates a data collection process. Namely, the first network function entity receives the fourth message from the fifth network function entity. The fourth message is used for subscribing or requesting the data of the UE. Alternatively, the first network function entity receives the fifth message from the fifth network function entity through the fourth network function entity. The fifth message is used for subscribing or requesting the data of the UE, and thus the first network function entity provides a corresponding data collection service.

In some optional embodiments of the disclosure, the method further includes: for each of the one or more UEs, the first network function entity sends a sixth message to the fifth network function entity or the fourth network function entity. The sixth message is used for notifying that the data subscription or data request of the UE is transferred or transmitted successfully, and the sixth message includes a first subscription identifier related to the first network function entity.

In this embodiment, the fourth network function entity may be referred to as a center DCCF or a coordinating DCCF, and is used for coordinating and managing various data requests or data subscriptions, and is capable of selecting or discovering a DCCF (which is the first network function entity or the source DCCF herein) capable of providing a corresponding data collection service for a consumer.

In some optional embodiments of the disclosure, the method further includes: for each of the one or more UEs, the first network function entity sends a seventh message for unsubscription to a sixth network function entity. The sixth network function entity supports providing the data of the UE.

In this embodiment, the sixth network function entity may particularly be a data source or a data provider, and supports providing the data of the UE.

In some optional embodiments of the disclosure, the method further includes: for each of the one or more UEs, the first network function entity decides or discovers a sixth network function entity through the third network function entity, and collects or subscribes the data of the UE from the sixth network function entity. The sixth network function entity supports providing the data of the UE.

In some optional embodiments of the disclosure, the operation that, for each of the one or more UEs, the first network function entity decides or discovers the sixth network function entity through the third network function entity includes following. The first network function entity sends an eighth message for deciding or discovering the sixth network function entity to the third network function entity. The eighth message includes the third parameter. The first network function entity receives a ninth message from the third network function entity. The ninth message at least includes a fourth parameter, and the fourth parameter at least includes at least one of following: an NF identifier, or the NF set identifier.

In some optional embodiments of the disclosure, the operation of collecting or subscribing the data of the UE from the sixth network function entity includes: for each of the one or more UEs, the first network function entity sends a tenth message to the sixth network function entity. The tenth message is used for collecting or subscribing the data of the UE, and the tenth message at least includes the third parameter.

Based on the above embodiment, embodiments of the disclosure further provide a method for handover. FIG. 2 illustrates a second schematic flowchart of a method for handover according to embodiments of the disclosure. As illustrated in FIG. 2, the method includes following operations for each of one or more user equipments (UEs).

At 201, a fourth network function entity selects or discovers a second network function entity corresponding to the UE based on position information of the UE.

At 202, the fourth network function entity decides to transfer or transmit a data subscription or data request of the corresponding UE to the second network function entity corresponding to the UE.

The method for handover of this embodiment is applied to the fourth network function entity. Exemplarily, the fourth network function entity may be referred to as a center DCCF or a coordinating DCCF, and is used for coordinating and managing various data requests or data subscriptions, and is capable of selecting or discovering a DCCF (which is the first network function entity or the source DCCF herein) capable of providing a corresponding data collection service for a consumer.

In this embodiment, for each of one or more UEs, when position information of the UE changes, the fourth network function entity determines whether a data collection service can be provided by itself continuously according to the changed position information of the UE. When it is determined that the fourth network function entity cannot provide the data collection service continuously, the fourth network function entity selects or discovers a second network function entity corresponding to the UE, and further decides to transfer or transmit a data subscription or data request of the UE to the second network function entity corresponding to the UE, so as to transfer or transmit the data subscription or data request of the UE to the second network function entity corresponding to the UE subsequently.

In the technical solution according to this embodiment, network function reselection (namely, DCCF reselection) is realized through a fourth network function entity, and a consumer does not need to re-subscribe data in case of a position of UE changes. Interoperation of multiple network function entities (i.e., DCCFs) is realized, and continuity of a data collection process is ensured.

In some optional embodiments of the disclosure, the method further includes that the fourth network function entity decides or subscribes the position information of the UE through a seventh network function entity.

In this embodiment, the seventh network function entity may be a network function entity (NF) capable of providing position information of UE, or may be an NF having a UE position sensing function or the like. Exemplarily, the seventh network function entity may be an AMF, an LMF or the like.

In this embodiment, for each of the one or more UEs, the fourth network function entity may subscribe the position information of the UE or a movement event of the UE from the seventh network function entity. When the position of the UE changes, the seventh network function entity may send a notification message or an event notification to the fourth network function entity. The notification message or the event notification contains the position information of the UE.

In some optional embodiments of the disclosure, the method further includes that, for each of the one or more UEs, the fourth network function entity selects or discovers the second network function entity corresponding to the UE through a third network function entity.

In some optional embodiments, the operation that for each of the one or more UEs, the fourth network function entity selects or discovers the second network function entity corresponding to the UE through the third network function entity includes following. For each of the one or more UEs, the fourth network function entity sends to a third network function entity a twelfth message for selecting or discovering a second network function entity corresponding to the UE. The twelfth message includes a first parameter, and the first parameter at least includes at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier. The fourth network function entity receives a thirteenth message from the third network function entity. The thirteenth message includes a second parameter, and the second parameter at least includes at least one of following: an NF identifier, or the NF set identifier.

As such, for each of the one or more UEs, the fourth network function entity may send the twelfth message to the third network function entity, and according to the first parameter carried in the twelfth message, the third network function entity may query the second network function entity capable of providing a data collection service. Through the information about the second network function entity (for example, the NF identifier, and the NF set identifier) carried in the second parameter in the third message, the fourth network function entity may select or discover the second network function entity corresponding to the UE.

In some optional embodiments of the disclosure, the method further includes: for each of the one or more UEs, the fourth network function entity transfers or transmits a data subscription or data request of the corresponding UE to the second network function entity corresponding to the UE.

In this embodiment, different UEs may correspond to a same second network function entity or may correspond to different second network function entities. Therefore, for each of the one or more UEs, the fourth network function entity transfers or transmits a data subscription or data request of the corresponding UE to the second network function entity corresponding to the UE.

In some optional embodiments, the operation that for each of the one or more UEs, the fourth network function entity transfers or transmits a data subscription or data request of the corresponding UE to the second network function entity corresponding to the UE includes: for each of the one or more UEs, the fourth network function entity sends a fourteenth message corresponding to the UE to the second network function entity corresponding to the UE. The fourteenth message is used for transferring or transmitting a data subscription or data request of the UE from a fifth network function entity, and the fourteenth message includes relevant information of the data subscription or data request of the UE.

In some optional embodiments of the disclosure, before the operation 201, the method further includes: for each of the one or more UEs, the fourth network function entity receives a fifteenth message from a fifth network function entity. The fifteenth message is used for subscribing or requesting data of the UE. The fifteenth message includes a third parameter, and the third parameter at least includes at least one of following: an identifier of the UE, an S-NSSAI, an NF type, an NF set identifier, an NWDAF identifier, an analysis identifier, or an NF instance identifier. The fourth network function entity decides or discovers the first network function entity through a third network function entity, and sends a sixteenth message to the first network function entity. The sixteenth message is used for subscribing or requesting the data of the UE, and the sixteenth message at least includes the third parameter.

In this embodiment, the fifth network function entity originally initiates a data collection process. Namely, for each of the one or more UEs, the fourth network function entity receives the fifteenth message from the fifth network function entity. The fifteenth message is used for subscribing or requesting the data of the UE.

In some optional embodiments of the disclosure, the method further includes that, for each of the one or more UEs, the fourth network function entity receives a seventeenth message from the first network function entity. The seventeenth message is used for notifying that the data subscription or data request of the UE is transferred or transmitted successfully, and the seventeenth message includes a first subscription identifier related to the first network function entity. The fourth network function entity receives an eighteenth message from the second network function entity. The eighteenth message is used for notifying that the data subscription or data request of the UE is transferred or transmitted successfully, and the eighteenth message includes a second subscription identifier related to the second network function entity.

Based on the above embodiment, embodiments of the disclosure further provide a method for handover. FIG. 3 illustrates a third schematic flowchart of a method for handover according to embodiments of the disclosure. As illustrated in FIG. 3, the method includes following operations for each of one or more user equipments (UEs).

At 301, a fifth network function entity selects or discovers a second network function entity corresponding to the UE based on position information of the UE.

At 302, the fifth network function entity decides to transfer or transmit a data subscription or data request of the corresponding UE to the second network function entity corresponding to the UE.

The method for handover of this embodiment is applied to the fifth network function entity. Exemplarily, the fifth network function entity may particularly be a consumer. The consumer is a node having a demand for an NWDAF analysis service. Optionally, the consumer may be implemented by another network device. Exemplarily, the consumer may be an NF device, an AF device, or the like. Of course, other node devices having a demand for the NWDAF analysis service also fall within the scope of protection of this embodiment, which is not limited in the embodiment.

In this embodiment, for each of one or more UEs, when position information of the UE changes, the fifth network function entity selects or discovers a second network function entity corresponding to the UE, and further decides to transfer or transmit a data subscription or data request of the UE to the second network function entity corresponding to the UE, so as to transfer or transmit the data subscription or data request of the UE to the second network function entity corresponding to the UE subsequently.

In the technical solution according to this embodiment, network function entity reselection (namely, DCCF reselection) is realized through a fifth network function entity, and a consumer does not need to re-subscribe data in case of a position of UE changes. Interoperation of multiple network function entities (i.e., DCCFs) is realized, and continuity of a data collection process is ensured.

In some optional embodiments of the disclosure, the method further includes that for each of the one or more UEs, the fifth network function entity decides or subscribes the position information of the UE through a seventh network function entity.

In this embodiment, for each of the one or more UEs, the fifth network function entity may subscribe the position information of the UE or a movement event of the UE from the seventh network function entity. When the position of the UE changes, the seventh network function entity may send a notification message or an event notification to the fifth network function entity. The notification message or the event notification contains the position information of the UE.

In some optional embodiments of the disclosure, the method further includes that for each of the one or more UEs, the fifth network function entity selects or discovers the second network function entity corresponding to the UE through a third network function entity.

In some optional embodiments, the operation that for each of the one or more UEs, the fifth network function entity selects or discovers the second network function entity corresponding to the UE through the third network function entity includes following. For each of the one or more UEs, the fifth network function entity sends to a third network function entity a nineteenth message for selecting or discovering a second network function entity corresponding to the UE. The nineteenth message includes a first parameter, and the first parameter at least includes at least one of following: the position information of the UE, an identifier of the UE, S-NSSAI, a network function (NF) type, a NF set identifier, an NWDAF identifier, an analysis identifier, or an NF instance identifier. The fifth network function entity receives a twentieth message from the third network function entity. The twentieth message includes a second parameter, and the second parameter at least includes at least one of following: an NF identifier, or the NF set identifier.

As such, the fifth network function entity may send the nineteenth message to the third network function entity, and according to the first parameter carried in the nineteenth message, the third network function entity may query the second network function entity capable of providing a data collection service. Through the information about the second network function entity (for example, the NF identifier, and the NF set identifier) carried in the second parameter in the twentieth message, the fifth network function entity may select or discover the second network function entity corresponding to the UE.

In some optional embodiments of the disclosure, the method further includes: for each of the one or more UEs, the fifth network function entity transfers or transmits a data subscription or data request of the corresponding UE to the second network function entity corresponding to the UE.

In this embodiment, different UEs may correspond to a same second network function entity or may correspond to different second network function entities. Therefore, for each of the one or more UEs, the fifth network function entity transfers or transmits a data subscription or data request of the corresponding UE to the second network function entity corresponding to the UE.

In some optional embodiments, the operation that for each of the one or more UEs, the fifth network function entity transfers or transmits a data subscription or data request of the corresponding UE to the second network function entity corresponding to the UE includes: for each of the one or more UEs, the fifth network function entity sends a fourteenth message corresponding to the UE to the second network function entity corresponding to the UE. The fourteenth message is used for transferring or transmitting a data subscription or data request of the UE from a fifth network function entity, and the fourteenth message includes relevant information of the data subscription or data request of the UE.

In some optional embodiments of the disclosure, before the operation 301, the method further includes: for each of the one or more UEs, the fifth network function entity decides or discovers a first network function entity through a third network function entity, and sends a fourth message to the first network function entity. The fourth message is used for subscribing or requesting data of the UE. The fourth message includes a third parameter, and the third parameter at least includes at least one of following: an identifier of the UE, an S-NSSAI, an NF type, an NF set identifier, an NWDAF identifier, an analysis identifier, or an NF instance identifier.

In this embodiment, the fifth network function entity originally initiates a data collection process. Namely, the fifth network function entity decides or discovers the first network function entity through the third network function entity, and sends the fourth message to the first network function entity. The first network function entity receives the fourth message from the fifth network function entity. The fourth message is used for subscribing or requesting the data of the UE, and thus the first network function entity provides a corresponding data collection service.

In some optional embodiments of the disclosure, the method further includes: for each of the one or more UEs, the fifth network function entity receives a sixth message from the first network function entity. The sixth message is used for notifying that the data subscription or data request of the UE is transferred or transmitted successfully, and the sixth message includes a first subscription identifier related to the first network function entity. The fifth network function entity receives an eleventh message from the second network function entity. The eleventh message is used for notifying that the data subscription or data request of the UE is transferred or transmitted successfully, and the eleventh message includes a second subscription identifier related to the second network function entity.

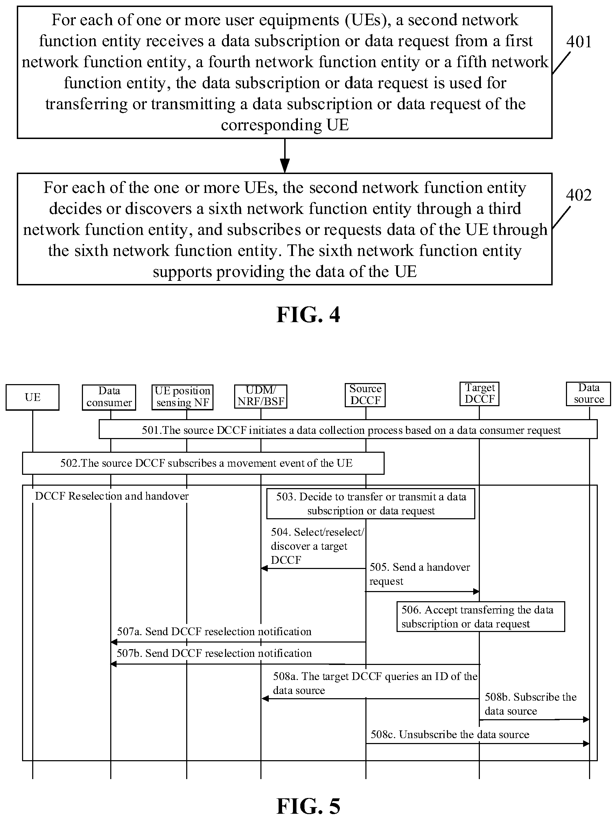

Based on the above embodiment, embodiments of the disclosure further provide a method for handover. FIG. 4 illustrates a second schematic flowchart of a method for handover according to embodiments of the disclosure. As illustrated in FIG. 4, the method includes following operations for each of one or more user equipments (UEs).

At 401, a second network function entity receives a data subscription or data request from a first network function entity, a fourth network function entity or a fifth network function entity. The data subscription or data request is used for transferring or transmitting a data subscription or data request of the UE.

At 402, the second network function entity decides or discovers a sixth network function entity through a third network function entity, and subscribes or requests data of the UE from the sixth network function entity. The sixth network function entity supports providing the data of the UE.

The method for handover in this embodiment is applied to the second network function entity. Exemplarily, the second network function entity may be referred to as a target DCCF, namely a data collection coordination function that can adapt to the position change of the UE after the position change of the UE.

In this embodiment, for each of the one or more UEs, the second network function entity receives a data subscription or data request from the first network function entity, the fourth network function entity or the fifth network function entity, and decides or discovers a sixth network function entity through the third network function entity. The sixth network function entity may particularly be a data source or a data provider, and supports providing the data of the UE, so as to subscribe or request the data of the UE from the sixth network function entity. Thus, the network function entity reselection (namely, DCCF reselection) is realized through the first network function entity, the fourth network function entity or the fifth network function entity, and a consumer does not need to subscribe data again in case of a position of UE changes. Interoperation of multiple network function entities (i.e., DCCFs) is realized, and continuity of a data collection process is ensured.

In some optional embodiments of the disclosure, the method further includes: for each of the one or more UEs, the second network function entity sends an eleventh message to the fifth network function entity or the fourth network function entity. The eleventh message is used for notifying that the data subscription or data request of the UE is transferred or transmitted successfully, and the eleventh message includes a second subscription identifier related to the second network function entity.

In some optional embodiments of the disclosure, the operation that for each of the one or more UEs, the second network function entity receives the data subscription or data request from the first network function entity, the fourth network function entity or the fifth network function entity includes the following: the second network function entity receives a third message from the first network function entity. The third message is used for transferring or transmitting a data subscription or data request of the UE from a fifth network function entity, and the third message includes relevant information of the data subscription or data request of the UE. Alternatively, the second network function entity receives a fourteenth message from the fourth network function entity or the fifth network function entity. The fourteenth message is used for transferring or transmitting a data subscription or data request of the UE from the fifth network function entity, and the fourteenth message includes relevant information of the data subscription or data request of the UE.

The method for handover according to embodiments of the disclosure is described hereinafter in conjunction with particular examples.

In the following examples, description is made with the first network function entity being a source DCCF, the second network function entity being a target DCCF, the third network function entity being a UDM/NRF/BSF, the fourth network function entity being a center DCCF, the fifth network function entity being a data consumer, the sixth network function entity being a data source and the seventh network function entity being a UE position sensing NF as an example.

### Example I

FIG. 5 illustrates a first schematic flowchart of interaction of a method for handover according to embodiments of the disclosure. As illustrated in FIG. 5, the method includes following operations.

At 501, a source DCCF initiates a data collection process based on a data consumer request.

Here, the data consumer (such as an NWDAF or an AF) needs to collect data of some UE/a set of UEs/any UE in an interested region. Through an NRF, the data consumer discovers a source DCCF capable of assisting in data collection, and requests the source DCCF for data collection. Through a UDM/NRF/BSF, the source DCCF queries a data source from which data of a related UE can be collected. In particular, the source DCCF obtains an identifier (ID) of the data source by performing query through the UDM/NRF/BSF, and subscribes the data of the some UE/a set of UEs/any UE from the data source.

This operation is equivalent to the following operation of the previous embodiment: for each of the one or more UEs, the first network function entity (source DCCF) receives a fourth message from a fifth network function entity (data consumer). The fourth message is used for subscribing or requesting data of the UE, and the fourth message includes a third parameter.

At 502, the source DCCF subscribes a movement event(s) of the some UE/a set of UEs/ any UE (referred to as UEs hereinafter).

Here, through the UE position sensing NF, the source DCCF subscribes movement event(s) of the UE(s), and an event notification(s) may be provided by the UE position sensing NF (such as AMF and LMF). When the UE(s) move(s), the UE position sensing NF sends position information of the UE(s) to the source DCCF through a movement event notification(s). This operation is a process of subscribing UE position(s).

The following is a DCCF reselection and handover process.

At 503, the source DCCF decides to transfer or transmit a data subscription(s) or data request(s) for data of the UE(s).

Here, after the source DCCF determines that the source DCCF cannot provide a data collection service continuously according to the position information of the UE(s) carried in the movement event notification in operation 502, the source DCCF decides to transfer or transmit a data subscription(s) or data request(s) for data of the UE(s).

At 504, for each of the UEs, the source DCCF selects, reselects or discovers a target DCCF corresponding to the UE.

Here, the source DCCF discovers the target DCCF(s) (or target DCCF set(s)) through the UDM/NRF/BSF according to the first parameters (for example, slice ID(s), position information of the UE(s), and analysis ID(s)) in the previous embodiment, so as to support data collection of the UE(s) in the target region.

Here, the source DCCF sends a first message to the UDM/NRF/BSF, and the first message includes the first parameter mentioned above. The source DCCF receives a second message from the UDM/NRF/BSF, and the second message includes a second parameter. The second parameter at least includes at least one of following: an NF identifier, or an NF set identifier. Thus, the source DCCF obtains relevant information about the target DCCF.

At 505, the source DCCF initiates a handover request to the target DCCF corresponding to the UE. The source DCCF requests to transfer the data subscription or data request of the data consumer in operation 501 to the target DCCF corresponding to the UE.

Here, for each of the UEs, the source DCCF sends a third message to the target DCCF corresponding to the UE. The third message is used for transferring or transmitting a data subscription or data request of the data consumer about the UE, and the third message includes relevant information (including for example a UE list and an NF type) of the data subscription or data request of the UE.

At 506, the target DCCF accepts transferring the data subscription or data request, and takes over the data subscription or data request according to the information received from the source DCCF.

At 507a, the source DCCF sends a DCCF reselection notification to the data consumer, to notify the data consumer that the data subscription or data request has been transferred successfully.

Here, the source DCCF sends a sixth message to the data consumer as in the previous embodiment. The sixth message is used for notifying that the data subscription(s) or data request(s) of the UE(s) is/are transferred or transmitted successfully, and the sixth message includes a first subscription identifier related to the first network function entity.

At 507b, the target DCCF sends a DCCF reselection notification to the data consumer, to notify the data consumer that the data subscription has been transferred successfully and to provide a new subscription identifier.

Here, for each of the UEs, the target DCCF corresponding to the UE sends an eleventh message to the data consumer as in the previous embodiment. The eleventh message is used for notifying that the data subscription or data request of the UE is transferred or transmitted successfully, and the eleventh message includes a second subscription identifier related to the second network function entity. The second subscription identifier is a new subscription identifier (ID) different from the first subscription identifier.

In operations 508a to 508c, the target DCCF corresponding to the UE queries the ID of the data source through the UDM/NRF/BSF based on the data subscription or data request transferred from the source DCCF, and contacts the data source based on the queried ID of the data source, so as to subscribe or request the data of the UE. The source DCCF unsubscribes the previous data subscription or data request.

Here, the source DCCF sends a seventh message for unsubscription to the data source.

### Example II

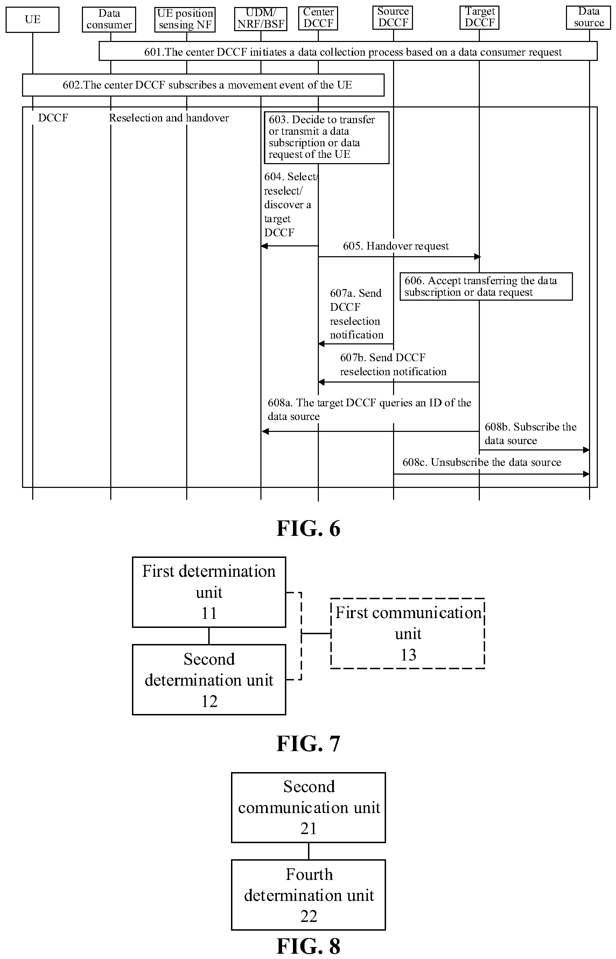

FIG. 6 illustrates a second schematic flowchart of interaction of a method for handover according to embodiments of the disclosure. As illustrated in FIG. 6, the method includes following operations.

At 601, a center DCCF initiates a data collection process based on a data consumer request.

Here, the data consumer (such as an NWDAF or an AF) needs to collect data of some UE/a set of UEs/any UE in an interested region. Through an NRF, the data consumer discovers the center DCCF capable of assisting in data collection, and contacts the center DCCF to request data collection. The center DCCF determines a source DCCF capable of providing a data collection service. In particular, the center DCCF determines the source DCCF capable of providing the data collection service by query through a UDM/NRF/BSF, and requests the source DCCF to perform data collection. Through a UDM/NRF/BSF, the source DCCF queries a data source from which data of a related UE can be collected. In particular, the source DCCF obtains an identifier (ID) of the data source by performing query through the UDM/NRF/BSF, and contacts the data source to subscribe the data of the some UE/a set of UEs/any UE.

This operation is equivalent to the following operations in the previous embodiment. The fourth network function entity receives a fifteenth message from a fifth network function entity. The fifteenth message is used for subscribing or requesting data of the one or more UEs. The fifteenth message includes a third parameter. The fourth network function entity decides or discovers the first network function entity through a third network function entity, and sends a sixteenth message to the first network function entity. The sixteenth message is used for subscribing or requesting the data of the one or more UEs, and the sixteenth message at least includes the third parameter. The first network function entity (source DCCF) receives a fourth message (the fourth message is equivalent to the fifteenth message and sixteenth message mentioned above) from the fifth network function entity (data consumer) through the fourth network function entity. The fourth message is used for subscribing or requesting data of the one or more UEs, and the fourth message includes the third parameter.

At 602, the center DCCF subscribes a movement event of the some UE/a set of UEs/ any UE (referred to as UEs hereinafter).

Here, through the UE position sensing NF, the center DCCF subscribes a movement event(s) of the UE(s), and an event notification(s) may be provided by the UE position sensing NF (such as AMF and LMF). When the UEs move, the UE position sensing NF sends position information of the UE(s) to the center DCCF through a movement event notification(s). This operation is a process of subscribing UE position(s).

The following is a DCCF reselection and handover process.

At 603, the center DCCF decides to transfer or transmit a data subscription(s) or data request(s) for data of the UE(s).

Here, after the center DCCF determines that the selected source DCCF cannot provide a data collection service continuously according to the position information of the UE(s) carried in the movement event notification(s) in operation 602, the source DCCF decides to transfer or transmit a data subscription(s) or data request(s) for data of the UE(s).

At 604, the center DCCF selects, reselects or discovers a target DCCF corresponding to each of the UE(s).

Here, the center DCCF discovers the target DCCFs (or target DCCF sets) through the UDM/NRF/BSF according to the first parameters (for example, slice IDs, position information of the UEs, and analysis IDs) in the previous embodiment, so as to support data collection of the UEs in the target region.

Here, the center DCCF sends a twelfth message to the UDM/NRF/BSF, and the twelfth message includes the first parameter mentioned above. The center DCCF receives a thirteenth message from the UDM/NRF/BSF, and the thirteenth message includes a second parameter. The second parameter at least includes at least one of following: an NF identifier, or an NF set identifier. Thus, the center DCCF obtains relevant information about the target DCCF.

At 605, the center DCCF initiates a handover request to the target DCCF. The center DCCF requests to transfer the data subscription or data request of the data consumer in operation 601 to the target DCCF.

Here, for each of the UEs, the center DCCF sends a fourteenth message corresponding to the UE to the target DCCF corresponding to the UE. The fourteenth message is used for transferring or transmitting a data subscription or data request of the data consumer about the UE, and the fourteenth message includes relevant information (including for example a UE list and an NF type) of the data subscription or data request of the UE.

At 606, the target DCCF accepts transferring the data subscription or data request, and takes over the data subscription or data request according to the information received from the center DCCF.

At 607a, the source DCCF sends a DCCF reselection notification to the center DCCF, to notify the center DCCF that the data subscription has been transferred successfully.

Here, the source DCCF sends a seventeenth message to the center DCCF as in the previous embodiment. The seventeenth message is used for notifying that the data subscription(s) or data request(s) of the UE(s) is/are transferred or transmitted successfully, and the seventeenth message includes a first subscription identifier related to the first network function entity.

At 607b, the target DCCF corresponding to the UE sends a DCCF reselection notification to the center DCCF, to notify the center DCCF that the data subscription has been transferred successfully and to provide a new subscription identifier.

Here, the target DCCF sends an eighteenth message to the center DCCF as in the previous embodiment. The eighteenth message is used for notifying that the data subscription(s) or data request(s) of the UE(s) is/are transferred or transmitted successfully, and the eighteenth message includes a second subscription identifier related to the second network function entity. The second subscription identifier is a new subscription identifier (ID) different from the first subscription identifier.

In operations 608a to 608c, the target DCCF queries the ID of the data source through the UDM/NRF/BSF based on the data subscription or data request transferred from the center DCCF, and contacts the data source based on the queried ID of the data source, so as to subscribe or request the data of the corresponding UE. The source DCCF unsubscribes the previous data subscription or data request.

Here, the source DCCF sends a seventh message for unsubscription to the data source.

Based on the above embodiment, embodiments of the disclosure further provide an apparatus for handover. FIG. 7 illustrates a first schematic structural diagram of composition of an apparatus for handover according to embodiments of the disclosure. As illustrated in FIG. 7, the apparatus includes a first determination unit 11 and a second determination unit 12.

For each of one or more user equipments (UEs), the first determination unit 11 is configured to: select or discover a second network function entity corresponding to the UE based on position information of the UE.

For each of the one or more UEs, the second determination unit 12 is configured to: decide to transfer or transmit a data subscription or data request of the UE to the second network function entity corresponding to the UE.

In some optional embodiments of the disclosure, the apparatus further includes a first communication unit 13. For each of the one or more UEs, the first communication unit 13 is configured to sends to a third network function entity a first message for selecting or discovering the second network function entity corresponding to the UE. The first message includes a first parameter, and the first parameter at least includes at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier. For each of the one or more UEs, the first communication unit 13 is configured to receive a second message from the third network function entity. The second message includes a second parameter, and the second parameter at least includes at least one of following: an NF identifier, or the NF set identifier.

In some optional embodiments of the disclosure, the apparatus further includes a first communication unit 13. For each of the one or more UEs, the first communication unit 13 is configured to transfer or transmit a data subscription or data request of the corresponding UE to the second network function entity corresponding to the UE.

In some optional embodiments of the disclosure, for each of the one or more UEs, the first communication unit 13 is configured to send a third message to the second network function entity corresponding to the UE. The third message is used for transferring or transmitting a data subscription or data request of the UE from a fifth network function entity, and the third message includes relevant information of the data subscription or data request of the UE.

In some optional embodiments of the disclosure, the apparatus further includes a first communication unit 13. For each of the one or more UEs, the first communication unit 13 is configured to receive a fourth message from a fifth network function entity. The fourth message is used for subscribing or requesting data of the UE. The fourth message includes a third parameter, and the third parameter at least includes at least one of following: an identifier of the UE, an S-NSSAI, an NF type, an NF set identifier, an NWDAF identifier, an analysis identifier, or an NF instance identifier. Alternatively, for each of the one or more UEs, the first communication unit 13 is configured to receive a fifth message from the fifth network function entity through a fourth network function entity. The fifth message is used for subscribing or requesting the data of the UE, and the fifth message at least includes the third parameter.

In some optional embodiments of the disclosure, for each of the one or more UEs, the first communication unit 13 is further configured to send a sixth message to the fifth network function entity or the fourth network function entity. The sixth message is used for notifying that the data subscription or data request of the UE is transferred or transmitted successfully, and the sixth message includes a first subscription identifier related to the first network function entity.

In some optional embodiments of the disclosure, for each of the one or more UEs, the first communication unit 13 is further configured to send a seventh message for unsubscription to a sixth network function entity. The sixth network function entity supports providing the data of the UE.

In some optional embodiments of the disclosure, for each of the one or more UEs, the first determination unit 11 is configured to decide or discover a sixth network function entity through the third network function entity, and collect or subscribe the data of the UE from the sixth network function entity. The sixth network function entity supports providing the data of the UE.

In some optional embodiments of the disclosure, the first determination unit 11 is further configured to send an eighth message for deciding or discovering the sixth network function entity to the third network function entity through the first communication unit 13. The eighth message includes the third parameter. The first determination unit 11 is further configured to receive a ninth message from the third network function entity. The ninth message at least includes a fourth parameter, and the fourth parameter at least includes at least one of following: an NF identifier, or the NF set identifier.

In some optional embodiments of the disclosure, for each of the one or more UEs, the first determination unit 11 is further configured to send a tenth message to the sixth network function entity through the first communication unit 13. The tenth message is used for collecting or subscribing the data of the UE, and the tenth message at least includes the third parameter.

In some optional embodiments of the disclosure, the apparatus further includes a third determination unit. For each of the one or more UEs, the third determination unit is configured to decide or subscribe the position information of the UE through a seventh network function entity.

In the embodiments of the disclosure, the apparatus is applied to the first network function entity. The first determination unit 11, the second determination unit 12 and the third determination unit in the apparatus may all be realized by a central processing unit (CPU), a digital signal processor (DSP), a microcontroller unit (MCU) or a field programmable gate array (FPGA) in practical applications. The first communication unit 13 in the apparatus may be realized by a communication module (containing such as a basic communication suite, an operating system, a communication module, a standardized interface and protocols) and a transceiving antenna in practical applications.

Embodiments of the disclosure further provide an apparatus for handover. FIG. 8 illustrates a second schematic structural diagram of composition of the apparatus for handover according to embodiments of the disclosure. As illustrated in FIG. 8, the apparatus includes a second determination unit 21 and a fourth determination unit 22.

For each of the one or more UEs, the second communication unit 21 is configured to receive a data subscription or data request from a first network function entity, a fourth network function entity or a fifth network function entity. The data subscription or data request is used for transferring or transmitting a data subscription or data request of the UE.

For each of the one or more UEs, the fourth determination unit 22 is configured to decide or discover a sixth network function entity through a third network function entity.

For each of the one or more UEs, the second communication unit 21 is further configured to subscribe or request data of the UE from the sixth network function entity. The sixth network function entity supports providing the data of the UE.

In some optional embodiments of the disclosure, for each of the one or more UEs, the second communication unit 21 is further configured to send an eleventh message to the fifth network function entity or the fourth network function entity. The eleventh message is used for notifying that the data subscription or data request of the UE is transferred or transmitted successfully, and the eleventh message includes a second subscription identifier related to the second network function entity.

In some optional embodiments of the disclosure, the second communication unit 21 is further configured to receive a third message from the first network function entity. The third message is used for transferring or transmitting a data subscription or data request of the UE from a fifth network function entity, and the third message includes relevant information of the data subscription or data request of the UE. Alternatively, the second communication unit 21 is further configured to receive a fourteenth message from the fourth network function entity or the fifth network function entity. The fourteenth message is used for transferring or transmitting a data subscription or data request of the UE from the fifth network function entity , and the fourteenth message includes relevant information of the data subscription or data request of the UE.

In the embodiments of the disclosure, the apparatus is applied to the second network function entity. The fourth determination unit 22 in the apparatus may be realized by a CPU, a DSP, an MCU or an FPGA in practical applications. The second communication unit 21 in the apparatus may be realized by a communication module (containing such as a basic communication suite, an operating system, a communication module, a standardized interface and protocols) and a transceiving antenna in practical applications.

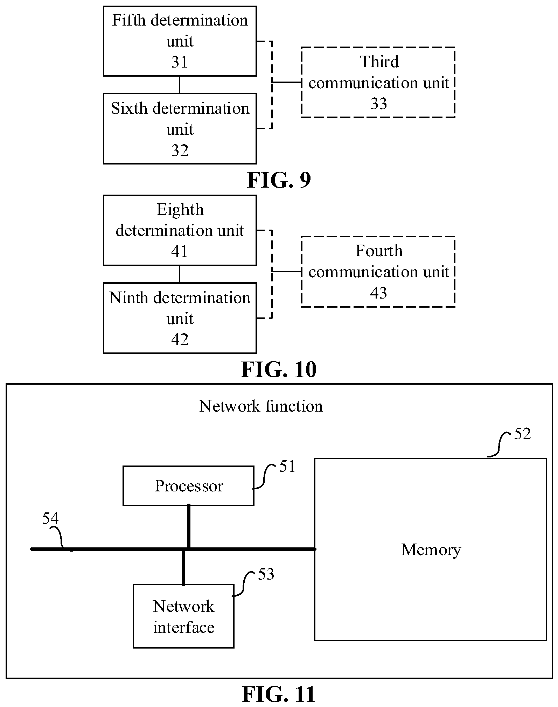

Embodiments of the disclosure further provide an apparatus for handover. FIG. 9 illustrates a third schematic structural diagram of composition of the apparatus for handover according to embodiments of the disclosure. As illustrated in FIG. 9, the apparatus includes a fifth determination unit 31 and a sixth determination unit 32.

For each of one or more user equipments (UEs), the fifth determination unit 31 is configured to: select or discover a second network function entity corresponding to the UE based on position information of the UE.

For each of the one or more UEs, the sixth determination unit 32 is configured to: decide to transfer or transmit a data subscription or data request of the UE to the second network function entity corresponding to the UE.

In some optional embodiments of the disclosure, the apparatus further includes a third communication unit 33. For each of the one or more UEs, the third communication unit 33 is configured to send to a third network function entity a twelfth message for selecting or discovering the second network function entity corresponding to the UE. The twelfth message includes a first parameter, and the first parameter at least includes at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier. The third communication unit 33 is configured to receive a thirteenth message from the third network function entity. The thirteenth message includes a second parameter, and the second parameter at least includes at least one of following: an NF identifier, or the NF set identifier.

In some optional embodiments of the disclosure, the apparatus further includes a third communication unit 33. For each of the one or more UEs, the third communication unit 33 is configured to transfer or transmit a data subscription or data request of the corresponding UE to the second network function entity corresponding to the UE.

In some optional embodiments of the disclosure, for each of the one or more UEs, the third communication unit 33 is configured to send a fourteenth message corresponding to the UE to the second network function entity corresponding to the UE. The fourteenth message is used for transferring or transmitting a data subscription or data request of the UE from a fifth network function entity, and the fourteenth message includes relevant information of the data subscription or data request of the corresponding UE.

In some optional embodiments of the disclosure, the apparatus further includes a third communication unit 33. For each of the one or more UEs, the third communication unit 13 is configured to receive a fifteenth message from a fifth network function entity. The fifteenth message is used for subscribing or requesting data of the UE. The fifteenth message includes a third parameter, and the third parameter at least includes at least one of following: an identifier of the UE, an S-NSSAI, an NF type, an NF set identifier, an NWDAF identifier, an analysis identifier, or an NF instance identifier.

For each of the one or more UEs, the fifth determination unit 31 is further configured to decide or discover a first network function entity through a third network function entity.

For each of the one or more UEs, the third communication unit 33 is further configured to send a sixteenth message to the first network function entity. The sixteenth message is used for subscribing or requesting the data of the UE, and the sixteenth message at least includes the third parameter.

In some optional embodiments of the disclosure, for each of the one or more UEs, the third communication unit 33 is further configured to receive a seventeenth message from the first network function entity. The seventeenth message is used for notifying that the data subscription or data request of the UE is transferred or transmitted successfully, and the seventeenth message includes a first subscription identifier related to the first network function entity. The third communication unit 33 is further configured to receive an eighteenth message from the second network function entity. The eighteenth message is used for notifying that the data subscription or data request of the UE is transferred or transmitted successfully, and the eighteenth message includes a second subscription identifier related to the second network function entity.

In some optional embodiments of the disclosure, the apparatus further includes a seventh determination unit. For each of the one or more UEs, the seventh determination unit is configured to decide or subscribe the position information of the UE through a seventh network function entity.

In the embodiments of the disclosure, the apparatus is applied to the fourth network function entity. The fifth determination unit 31, the sixth determination unit 32 and the seventh determination unit in the apparatus may be realized by a CPU, a DSP, an MCU or an FPGA in practical applications. The third communication unit 33 in the apparatus may be realized by a communication module (containing such as a basic communication suite, an operating system, a communication module, a standardized interface and protocols) and a transceiving antenna in practical applications.

Embodiments of the disclosure further provide an apparatus for handover. FIG. 10 illustrates a fourth schematic structural diagram of composition of the apparatus for handover according to embodiments of the disclosure. As illustrated in FIG. 10, the apparatus includes an eighth determination unit 41 and a ninth determination unit 42.

For each of one or more user equipments (UEs), the eighth determination unit 41 is configured to: select or discover a second network function entity corresponding to the UE based on position information of the UE.

For each of the one or more UEs, the ninth determination unit 42 is configured to: decide to transfer or transmit a data subscription or data request of the UE to the second network function entity corresponding to the UE.

In some optional embodiments of the disclosure, the apparatus further includes a fourth communication unit 43. For each of the one or more UEs, the fourth communication unit 33 is configured to send to a third network function entity a nineteenth message for selecting or discovering the second network function entity corresponding to the UE. The nineteenth message includes a first parameter, and the first parameter at least includes at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier. The fourth communication unit 33 is configured to receive a twentieth message from the third network function entity. The twentieth message includes a second parameter, and the second parameter at least includes at least one of following: an NF identifier, or the NF set identifier.

In some optional embodiments of the disclosure, the apparatus further includes a fourth communication unit 43. For each of the one or more UEs, the fourth communication unit 13 is configured to transfer or transmit a data subscription or data request of the corresponding UE to the second network function entity corresponding to the UE.

In some optional embodiments of the disclosure, for each of the one or more UEs, the fourth communication unit 43 is configured to send a fourteenth message corresponding to the UE to the second network function entity corresponding to the UE. The fourteenth message is used for transferring or transmitting a data subscription or data request of the UE from the fifth network function entity, and the fourteenth message includes relevant information of the data subscription or data request of the corresponding UE.

In some optional embodiments of the disclosure, for each of the one or more UEs, the eighth determination unit 41 is configured to decide or discover a first network function entity through a third network function entity, and send a fourth message to the first network function entity through the fourth communication unit 43. The fourth message is used for subscribing or requesting data of the UE. The fourth message includes a third parameter, and the third parameter at least includes at least one of following: an identifier of the UE, an S-NSSAI, an NF type, an NF set identifier, an NWDAF identifier, an analysis identifier, or an NF instance identifier.

In some optional embodiments of the disclosure, for each of the one or more UEs, the fourth communication unit 43 is further configured to receive a sixth message from the first network function entity. The sixth message is used for notifying that the data subscription or data request of the UE is transferred or transmitted successfully, and the sixth message includes a first subscription identifier related to the first network function entity. The fourth communication unit 43 is further configured to receive an eleventh message from the second network function entity. The eleventh message is used for notifying that the data subscription or data request of the UE is transferred or transmitted successfully, and the eleventh message includes a second subscription identifier related to the second network function entity.

In some optional embodiments of the disclosure, the apparatus further includes a tenth determination unit. For each of the one or more UEs, the tenth determination unit is configured to decide or subscribe the position information of the UE through a seventh network function entity.

In the embodiments of the disclosure, the apparatus is applied to the fifth network function entity. The eighth determination unit 41, the ninth determination unit 42 and the tenth determination unit in the apparatus may be realized by a CPU, a DSP, an MCU or an FPGA in practical applications. The fourth communication unit 43 in the apparatus may be realized by a communication module (containing such as a basic communication suite, an operating system, a communication module, a standardized interface and protocols) and a transceiving antenna in practical applications.

It is to be noted that for the above apparatus for handover according to the embodiments, the division of the program modules above is used as an example for description of the handover only. In practical applications, the processing may be allocated to and accomplished by different program modules according to demands. Namely, the inner structure of the apparatus may be divided into different program modules to accomplish all or part of the processing described above. Additionally, the above apparatus for handover according to the embodiments belong to the same concept as the method for handover, and details of the particular implementation process of the apparatus may refer to the method embodiments, which will not be described here again.

Embodiments of the disclosure further provide a network function entity. The network function entity may be the first network function entity, the second network function entity, the fourth network function entity or the fifth network function entity in the previous embodiments. FIG. 11 illustrates a schematic structural diagram of hardware composition of a network function entity according to embodiments of the disclosure. As illustrated in FIG. 11, the network function entity includes a memory 52, a processor 51, and a computer program that is stored in the memory 52 and is capable of being run on the processor 51. The processor 51 executes the computer program to implement the steps of the method for handover applied to the first network function entity, the second network function entity, the fourth network function entity or the fifth network function entity in the embodiments of the disclosure.

Optionally, the network function entity further includes one or more network interfaces 53. Various components in the network function entity are coupled together through a bus system 54. It may be understood that the bus system 54 is used for realizing the connection and communication between the components. Besides a data bus, the bus system 54 further includes a power bus, a control bus and a state signal bus. However, for clarity of description, the buses are all signed as the bus system 54 in FIG. 11.

It may be understood that the memory 52 may be a volatile memory or a non-volatile memory, or may include both a volatile memory and a non-volatile memory. The non-volatile memory may be a Read Only Memory (ROM), a Programmable Read-Only Memory (PROM), an Erasable Programmable Read-Only Memory (EPROM) an Electrically Erasable Programmable Read-Only Memory (EEPROM), a Ferromagnetic Random Access Memory (FRAM), a Flash Memory, a magnetic surface memory, an optical disc, or a compact disk read only memory (CD-ROM), or may be a device containing one or a combination of those memories. The magnetic surface memory may be a hard disk memory or a tape memory. The volatile memory may be a random access memory (RAM), that is used as an external cache. By way of example but not limiting, many forms of RAMs are usable, for example a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory 52 described in the embodiments of the disclosure is intended to include but not limited to memories of these and any other suitable types.

The method disclosed in above embodiments of the disclosure may be applied to the processor 51, or may be implemented by the processor 51. The processor 51 may be an integrated circuit chip, and has the capability of signal processing. During implementation, the various steps of in the above method may be completed by an integrated logic circuit in hardware form or instructions in software form in the processor 51. The above processor 51 may be a general-purpose processor, a digital signal processor (DSP), or other programmable logic devices, discrete gates or transistor logic devices, discrete hardware components and so on. The processor 51 may implement or perform the various methods, steps or logic blocks disclosed in the embodiments of the disclosure. The universal processor may be a microprocessor or any conventional processor and the like. The steps of the methods disclosed in combination with the embodiments of the disclosure may be directly embodied as being performed and completed by a hardware decoding processor, or being performed and completed by a combination of hardware and software modules in a decoding processor. The soft modules may be located in a storage medium. The storage medium is in the memory 52, and the processor 51 reads information from the memory 52 to implement steps of the above methods in combination with the hardware.

In an exemplary embodiment, the network function entity may be implemented by one or more Application Specific Integrated Circuit (ASICs), DSPs, Programmable Logic Devices (PLDs), Complex Programmable Logic Devices (CPLDs), FPGAs, general-purpose processors, controllers, MCUs, Microprocessors, or other electronic elements, to execute the method above.

In an exemplary embodiment, embodiments of the disclosure further provide a computer-readable storage medium, for example the memory 52 including a computer program. The computer program may be executed by the processor 51 off the network function entity, to accomplish the steps of the above method. The computer-readable storage medium may be such as a ferroelectric random access memory (FRAM), a read-only memory (ROM), a programmable read-only memory (PROM), an electrically programmable read-only memory (EPROM), an electrically erasable programmable read-only memory (EEPROM), a flash drive, a magnetic surface memory, an optical disc, or a compact disk read only memory (CD-ROM), or may be a device containing one or a combination of those memories.

The computer-readable storage according to the embodiments of the disclosure stores a computer program. The computer program, when executed by the processor, implement the steps of the method for handover applied to the first network function entity, the second network function entity, the fourth network function entity or the fifth network function entity in the embodiments of the disclosure.

The methods disclosed in the method embodiments according to the disclosure may be arbitrarily without conflict, to obtain a new method embodiment.

The features disclosed in the product embodiments according to the disclosure may be arbitrarily without conflict, to obtain a new product embodiment.

The features disclosed in the method embodiments or device embodiments according to the disclosure may be arbitrarily without conflict, to obtain a new method embodiment or a new device embodiment.

In some embodiments provided in the disclosure, it is to be understood that the disclosed device and method may be implemented in other ways. The device embodiments described above are only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of the embodiments according to actual requirements.

Additionally, various functional units in the embodiments of the disclosure may be all integrated in one processing unit, or may exist separately physically; or two or more units may be integrated in one unit. The integrated unit may be implemented in form of hardware, or may be implemented in form of hardware plus software functions.

Those of ordinary skill in the art may understand that all or some steps of the above method embodiment may be accomplished by hardware related to program instructions. The program described above may be stored in a computer-readable storage medium, and the program, when executed, implements the steps of the method embodiments. The foregoing storage medium includes various media capable of storage program codes such as a mobile hard disk drive, a read-only memory (ROM), a random access memory (RAM), a magnetic disc, or a compact disc (CD).

Alternatively, if implemented in form of software functional units and sold or used as independent product, the above integrated unit of the disclosure may also be stored in a computer-readable storage medium. Based on such understanding, the technical solution of the embodiments of the disclosure substantially or in part making contributions to the related art may be embodied in a software product. The computer software product is stored in a storage medium, and includes several instructions to enable a computer device (which may be a personal computer, a server, a network function entity or the like) to perform all or some of the method according to various embodiments of the disclosure. The foregoing storage medium includes various media capable of storage program codes such as a mobile hard disk drive, a read-only memory (ROM), a random access memory (RAM), a magnetic disc, or a compact disc (CD).

[**00238]** Stated above is merely detailed description of the disclosure, but the scope of protection of the disclosure is not limited thereto. Any modification or replacement that is easily conceivable by those familiar with the related art within the technical range disclosed by the disclosure shall fall within the scope of protection of the disclosure. Therefore, the scope of protection of the disclosure should be subjected to the claimed scope of the claims.

## Claims

1. A method for handover, comprising: for each of one or more user equipments (UEs),
selecting or discovering, by a first network function entity, a second network function entity corresponding to the UE based on position information of the UE; and
deciding, by the first network function entity, to transfer or transmit a data subscription or data request of the UE to the second network function entity corresponding to the UE.

2. The method of claim 1, further comprising: for each of the one or more UEs,
sending, by the first network function entity to a third network function entity, a first message for selecting or discovering the second network function entity corresponding to the UE, wherein the first message comprises a first parameter, and the first parameter at least comprises at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier; and
receiving, by the first network function entity, a second message from the third network function entity, wherein the second message comprises a second parameter, and the second parameter at least comprises at least one of following: an NF identifier, or the NF set identifier.

3. The method of claim 1, further comprising: for each of the one or more UEs,
transferring or transmitting, by the first network function entity, the data subscription or data request of the corresponding UE to the second network function entity corresponding to the UE.

4. The method of claim 3, wherein for each of the one or more UEs, transferring or transmitting, by the first network function entity, the data subscription or data request of the corresponding UE to the second network function entity corresponding to the UE comprises:
for each of the one or more UEs, sending, by the first network function entity, a third message to the second network function entity corresponding to the UE, wherein the third message is used for transferring or transmitting a data subscription or data request of the UE from a fifth network function entity, and the third message comprises relevant information of the data subscription or data request of the corresponding UE.

5. The method of any one of claims 1 to 4, further comprising: for each of the one or more UEs,
receiving, by the first network function entity, a fourth message from a fifth network function entity, wherein the fourth message is used for subscribing or requesting data of the UE, the fourth message comprises a third parameter, and the third parameter at least comprises at least one of following: an identifier of the UE, an S-NSSAI, an NF type, an NF set identifier, an NWDAF identifier, an analysis identifier, or an NF instance identifier; or
receiving, by the first network function entity, a fifth message from the fifth network function entity through a fourth network function entity, wherein the fifth message is used for subscribing or requesting the data of the UE, and the fifth message at least comprises the third parameter.

6. The method of claim 5, further comprising: for each of the one or more UEs,
sending, by the first network function entity, a sixth message to the fifth network function entity or the fourth network function entity, wherein the sixth message is used for notifying that the data subscription or data request of the UE is transferred or transmitted successfully, and the sixth message comprises a first subscription identifier related to the first network function entity.

7. The method of claim 6, further comprising: for each of the one or more UEs,
sending, by the first network function entity, a seventh message for unsubscription to a sixth network function entity, wherein the sixth network function entity supports providing the data of the UE.

8. The method of claim 5, further comprising: for each of the one or more UEs,
deciding or discovering, by the first network function entity, a sixth network function entity through the third network function entity, and collecting or subscribing the data of the UE from the sixth network function entity, wherein the sixth network function entity supports providing the data of the UE.

9. The method of claim 8, wherein deciding or discovering, by the first network function entity, the sixth network function entity through the third network function entity comprises:
sending, by the first network function entity, an eighth message for deciding or discovering the sixth network function entity to the third network function entity, wherein the eighth message comprises the third parameter; and
receiving, by the first network function entity, a ninth message from the third network function entity, wherein the ninth message at least comprises a fourth parameter, and the fourth parameter at least comprises at least one of following: an NF identifier, or the NF set identifier.

10. The method of claim 8, wherein collecting or subscribing the data of the UE from the sixth network function entity comprises: for each of the one or more UEs,
sending, by the first network function entity, a tenth message to the sixth network function entity, wherein the tenth message is used for collecting or subscribing the data of the UE, and the tenth message at least comprises the third parameter.

11. The method of claim 1, further comprising: for each of the one or more UEs,
deciding or subscribing, by the first network function entity, the position information of the UE through a seventh network function entity.

12. A method for handover, comprising: for each of one or more user equipments (UEs),
receiving, by a second network function entity, a data subscription or data request from a first network function entity, a fourth network function entity or a fifth network function entity, wherein the data subscription or data request is used for transferring or transmitting a data subscription or data request of the UE; and
deciding or discovering, by the second network function entity, a sixth network function entity through a third network function entity, and subscribing or requesting data of the UE from the sixth network function entity, wherein the sixth network function entity supports providing the data of the UE.

13. The method of claim 12, further comprising: for each of the one or more UEs,
sending, by the second network function entity, an eleventh message to the fifth network function entity or the fourth network function entity, wherein the eleventh message is used for notifying that the data subscription or data request of the UE is transferred or transmitted successfully, and the eleventh message comprises a second subscription identifier related to the second network function entity.

14. The method of claim 12, wherein receiving, by the second network function entity, the data subscription or data request from the first network function entity, the fourth network function entity or the fifth network function entity comprises: for each of the one or more UEs,
receiving, by the second network function entity, a third message from the first network function entity, wherein the third message is used for transferring or transmitting the data subscription or data request of the UE from a fifth network function entity, and the third message comprises relevant information of the data subscription or data request of the UE; or
receiving, by the second network function entity, a fourteenth message from the fourth network function entity or the fifth network function entity, wherein the fourteenth message is used for transferring or transmitting the data subscription or data request of the UE from the fifth network function entity, and the fourteenth message comprises relevant information of the data subscription or data request of the corresponding UE.

15. A method for handover, comprising: for each of one or more user equipments (UEs),
selecting or discovering, by a fourth network function entity, a second network function entity corresponding to the UE based on position information of the UE; and
deciding, by the fourth network function entity, to transfer or transmit a data subscription or data request of the corresponding UE to the second network function entity corresponding to the UE.

16. The method of claim 15, further comprising: for each of the one or more UEs,
sending, by the fourth network function entity to a third network function entity, a twelfth message for selecting or discovering a second network function entity corresponding to the UE, wherein the twelfth message comprises a first parameter, and the first parameter at least comprises at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier; and
receiving, by the fourth network function entity, a thirteenth message from the third network function entity, wherein the thirteenth message comprises a second parameter, and the second parameter at least comprises at least one of following: an NF identifier, or the NF set identifier.

17. The method of claim 15, further comprising: for each of the one or more UEs,
transferring or transmitting, by the fourth network function entity, the data subscription or data request of the corresponding UE to the second network function entity corresponding to the UE.

18. The method of claim 17, wherein for each of the one or more UEs, transferring or transmitting, by the fourth network function entity, the data subscription or data request of the corresponding UE to the second network function entity corresponding to the UE comprises:
for each of the one or more UEs, sending, by the fourth network function entity, a fourteenth message to the second network function entity corresponding to the UE, wherein the fourteenth message is used for transferring or transmitting a data subscription or data request of the UE from a fifth network function entity, and the fourteenth message comprises relevant information of the data subscription or data request of the corresponding UE.

19. The method of any one of claims 15 to 18, further comprising: for each of the one or more UEs,
receiving, by the fourth network function entity, a fifteenth message from a fifth network function entity, wherein the fifteenth message is used for subscribing or requesting data of the UE, the fifteenth message comprises a third parameter, and the third parameter at least comprises at least one of following: an identifier of the UE, an S-NSSAI, an NF type, an NF set identifier, an NWDAF identifier, an analysis identifier, or an NF instance identifier; and
deciding or discovering, by the fourth network function entity, the first network function entity through a third network function entity, and sending a sixteenth message to the first network function entity, wherein the sixteenth message is used for subscribing or requesting the data of the UE, and the sixteenth message at least comprises the third parameter.

20. The method of claim 19, further comprising: for each of the one or more UEs,
receiving, by the fourth network function entity, a seventeenth message from the first network function entity, wherein the seventeenth message is used for notifying that the data subscription or data request of the UE is transferred or transmitted successfully, and the seventeenth message comprises a first subscription identifier related to the first network function entity; and
receiving, by the fourth network function entity, an eighteenth message from the second network function entity, wherein the eighteenth message is used for notifying that the data subscription or data request of the UE is transferred or transmitted successfully, and the eighteenth message comprises a second subscription identifier related to the second network function entity.

21. The method of claim 15, further comprising:
deciding or subscribing, by the fourth network function entity, the position information of the UE through a seventh network function entity.

22. A method for handover, comprising: for each of one or more user equipments (UEs),
selecting or discovering, by a fifth network function entity, a second network function entity corresponding to the UE based on position information of the UE; and
deciding, by the fifth network function entity, to transfer or transmit a data subscription or data request of the corresponding UE to the second network function entity corresponding to the UE.

23. The method of claim 22, further comprising: for each of the one or more UEs,
sending, by the fifth network function entity to a third network function entity, a nineteenth message for selecting or discovering a second network function entity corresponding to the UE, wherein the nineteenth message comprises a first parameter, and the first parameter at least comprises at least one of following: the position information of the UE, an identifier of the UE, single-network slice selection assistance information (S-NSSAI), a network function (NF) type, a NF set identifier, a network data analysis function (NWDAF) identifier, an analysis identifier, or an NF instance identifier; and
receiving, by the fifth network function entity, a twentieth message from the third network function entity, wherein the twentieth message comprises a second parameter, and the second parameter at least comprises at least one of following: an NF identifier, or the NF set identifier.

24. The method of claim 22, further comprising:
for each of the one or more UEs, transferring or transmitting, by the fifth network function entity, a data subscription or data request of the corresponding UE to the second network function entity corresponding to the UE.

25. The method of claim 24, wherein for each of the one or more UEs, transferring or transmitting, by the fifth network function entity, the data subscription or data request of the corresponding UE to the second network function entity corresponding to the UE comprises:
for each of the one or more UEs, sending, by the fifth network function entity, a fourteenth message corresponding to the UE to the second network function entity corresponding to the UE, wherein the fourteenth message is used for transferring or transmitting a data subscription or data request of the UE from the fifth network function entity , and the fourteenth message comprises relevant information of the data subscription or data request of the corresponding UE.

26. The method of any one of claims 22 to 25, further comprising: for each of the one or more UEs,
deciding or discovering, by the fifth network function entity, a first network function entity through a third network function entity, and sending a fourth message to the first network function entity, wherein the fourth message is used for subscribing or requesting data of the UE, the fourth message comprises a third parameter, and the third parameter at least comprises at least one of following: an identifier of the UE, an S-NSSAI, an NF type, an NF set identifier, an NWDAF identifier, an analysis identifier, or an NF instance identifier.

27. The method of claim 26, further comprising: for each of the one or more UEs,
receiving, by the fifth network function entity, a sixth message from the first network function entity, wherein the sixth message is used for notifying that the data subscription or data request of the UE is transferred or transmitted successfully, and the sixth message comprises a first subscription identifier related to the first network function entity; and
receiving, by the fifth network function entity, an eleventh message from the second network function entity, wherein the eleventh message is used for notifying that the data subscription or data request of the UE is transferred or transmitted successfully, and the eleventh message comprises a second subscription identifier related to the second network function entity.

28. The method of claim 22, further comprising: for each of the one or more UEs,
deciding or subscribing, by the fifth network function entity, the position information of the UE through a seventh network function entity.

29. An apparatus for handover, comprising: a first determination unit and a second determination unit, wherein for each of one or more user equipments (UEs),
the first determination unit is configured to: select or discover a second network function entity corresponding to the UE based on position information of the UE; and
the second determination unit is configured to: decide to transfer or transmit a data subscription or data request of the UE to the second network function entity corresponding to the UE.

30. An apparatus for handover, comprising: a second communication unit and a fourth determination unit, wherein for each of one or more user equipments (UEs),
the second communication unit is configured to receive a data subscription or data request from a first network function entity, a fourth network function entity or a fifth network function entity, wherein the data subscription or data request is used for transferring or transmitting a data subscription or data request of the UE;
the fourth determination unit is configured to decide or discover a sixth network function entity through a third network function entity; and
the second communication unit is further configured to subscribe or request data of the UE from the sixth network function entity, wherein the sixth network function entity supports providing the data of the UE.

31. An apparatus for handover, comprising: a fifth determination unit and a sixth determination unit, wherein for each of one or more user equipments (UEs),
the fifth determination unit is configured to: select or discover a second network function entity corresponding to the UE based on position information of the UE; and
the sixth determination unit is configured to: decide to transfer or transmit a data subscription or data request of the UE to the second network function entity corresponding to the UE.

32. An apparatus for handover, comprising: an eighth determination unit and a ninth determination unit, wherein for each of one or more user equipments (UEs),
the eighth determination unit is configured to: select or discover a second network function entity corresponding to the UE based on position information of the UE; and
the ninth determination unit is configured to: decide to transfer or transmit a data subscription or data request of the UE to the second network function entity corresponding to the UE.

33. A computer-readable storage medium stored with a computer program, wherein the computer program, when executed by a processor, implements the steps of the method of any one of claims 1 to 11; or
the computer program, when executed by the processor, implements the steps of the method of any one of claims 12 to 14; or
the computer program, when executed by the processor, implements the steps of the method of any one of claims 15 to 21; or
the computer program, when executed by the processor, implements the steps of the method of any one of claims 22 to 28.

34. A network function entity comprising a memory, a processor, and a computer program that is stored in the memory and is capable of being run on the processor, wherein the processor executes the computer program to implement the steps of the method of any one of claims 1 to 11; or
the processor executes the computer program to implement the steps of the method of any one of claims 12 to 14; or
the processor executes the computer program to implement the steps of the method of any one of claims 15 to 21; or
the processor executes the computer program to implement the steps of the method of any one of claims 22 to 28.
